# EUROPEAN PATENT APPLICATION

(11) **EP 2 693 590 A1**
(43) Date of publication of application: **05.02.2014**
(21) Application number: 12764087.8
(22) Date of filing: 08.03.2012
(51) Int. Cl.: H02J 3/38

(54) **DISTRIBUTED POWER GENERATION SYSTEM AND METHOD FOR OPERATING SAME**

(30) Priority: 30.03.2011 JP 2011075049
(71) Applicant: Panasonic Corporation, Kadoma-shi, Osaka 571-8501 (JP)
(72) Inventor: SATO, Keiichi, Osaka 540-6207 (JP); KATOU, Motomichi, Osaka 540-6207 (JP); KAKU, Hiroaki, Osaka 540-6207 (JP); KAKE, Nin, Osaka 540-6207 (JP); NAGASATO, Hiroshi, Osaka 540-6207 (JP)
(74) Representative: Grünecker, Kinkeldey, Stockmair & Schwanhäusser
(86) International application number: PCT/JP2012/001595
(87) International publication number: WO 2012/132258

(57) **Abstract**

A distributed power generation system of the present invention is a distributed power generation system connected to an electric wire (33) connecting a power supply utility (21) to a power load (24), in which a second power generation device (29) is connected to the electric wire (33) in a position between the power supply utility (21) and a first connection point (24), the distributed power generation system comprising: an inverter (25) connected to the first connection point (23); a first power generation device (27), a current sensor (22) provided on the electric wire (33) in a position between the utility power supply (21) and the first connection point (23); and a controller (26) wherein in a case where a current flowing in a direction from the first connection point (23) to the power supply utility (21) is a positive current, the controller (26) determines that there is an abnormality in an installation state of the current sensor (22), or performs notification of the abnormality in the installation state ofthe current sensor (22), when an electric power difference obtained by subtracting electric power consumed in the power load (24) from the electric power output from the inverter (25) is greater than a first threshold which is greater than 0.

## Description

### Technical Field

The present invention relates to a distributed power generation system interactively connected to a power supply utility and an operation method thereof.

### Background Art

In recent years, awareness of conservation of global environment has been increasing more and more, and distributed power generation devices for household uses have been spread. As the distributed power generation devices, for example, there are a solar light power generation device, a fuel cell power generation system, etc.. So far, a single (one kind of) distributed power generation device is installed in one home. With increasing awareness of conservation of global environment, cases where two kinds of distributed power generation devices are placed together in one home occur. For example, cases where both of the solar light power generation device and the fuel cell power generation system are installed in one home, and these two kinds of distributed power generation devices perform power generation, i.e., double power generation, have been increasing.

For cases where the two kinds of distributed power generation devices perform power generation, there is known an electricity distribution system used to efficiently distribute AC power and DC power and intended to improve an electric power efficiency (see e.g., Patent Literature 1). Fig. 7 is a view showing a schematic configuration of the electricity distribution system disclosed in Patent Literature 1.

As shown in Fig. 7, in the electricity distribution system disclosed in Patent Literature 1, a fuel cell 111 and a solar cell 101 are connected to an electric wire 102 connecting a power supply utility and an AC power load (e.g., home power load) to each other. Specifically, the fuel cell 111 is connected to a first connection point 105 of the electric wire 102 via an electric wire 106. The solar cell 101 is connected to a second connection point 107 of the electric wire 102 via an electric wire 108.

A power conditioner 112 is provided at a portion of the electric wire 106. The power conditioner 112 converts the DC power generated in the fuel cell 111 into the AC power and supplies the AC power to the AC power load. A power conditioner 103 is provided at a portion of the electric wire 108. The power conditioner 103 convers the DC power generated in the solar cell 101 into the AC power and performs reverse power flow of the AC power to the power supply utility or supplies the AC power to the AC power load.

Between the first connection point 105 and the second connection point 107 on the electric wire 102, a first current sensor 104a is provided. A second current sensor 104b is provided on the electric wire 108 in a position close to the second connection point 107 than the power conditioner 103. A power output control section 113 controls the power conditioner 112 based on a current value detected by the first current sensor 104a and a current value detected by the second current sensor 104b.

### Citation List

### Patent Literature

Patent Literature 1: Japanese Laid-Open Patent Application Publication No. 2010-41886

### Summary of Invention

### Technical Problem

In the electricity distribution system disclosed in Patent Literature 1, it is presupposed that the first current sensor 104a is disposed between the first connection point 105 and the second connection point 107 on the electric wire 102.

However, in a case where construction and maintenance of the fuel cell 111 are carried out in a state in which the solar cell 101 is installed, the first current sensor 104a is attached to a wrong (incorrect) position, for example, a position between the power supply utility and the second connection point 107 on the electric wire 102. In such a case, the first current sensor 104a cannot accurately detect the electric power consumed in the AC power load.

The present invention is directed to solving the above described problems associated with the prior arts, and an object of the present invention is to provide a distributed power generation system which is able to determine whether or not a current sensor is installed correctly, with a simple configuration.

### Solution to Problem

To solve the above mentioned problem, a distributed power generation system of the present invention is a distributed power generation system connected to an electric wire connecting a power supply utility to a power load, in which a second power generation device is connected to the electric wire in a position between the power supply utility and a first connection point, the distributed power generation system comprising: an inverter connected to the first connection point, a first power generation device for supplying the electric power to the inverter, a current sensor provided on the electric wire in a position between the power supply utility and the first connection point, and a controller, wherein in a case where a current flowing in a direction from the first connection point to the power supply utility is a positive current, the controller determines that there is an abnormality in an installation state of the current sensor, or performs notification ofthe abnormality in the installation state of the current sensor, when an electric power difference obtained by subtracting electric power consumed in the power load from the electric power output from the inverter is greater than a first threshold which is greater than 0.

With this configuration, the installation state of the current sensor can be determined.

The above and further objects, features and advantages of the present invention will more fully be apparent from the following detailed description of preferred embodiments with accompanying drawings.

### Advantageous Effects of Invention

In accordance with the distributed power generation system and the operation method thereof of the present invention, the installation state of the current sensor can be determined.

### Brief Description of Drawings

[Fig. 1] Fig. 1 is a view showing a schematic configuration of a distributed power generation system according to Embodiment 1.
[Fig. 2] Fig. 2 is a schematic view showing a state in which a current sensor is installed in a wrong position in the distributed power generation system.
[Fig. 3] Fig. 3 is a flowchart showing determination performed by a controller as to an installation state of the current sensor in the distributed power generation system according to Embodiment 1.
[Fig. 4] Fig. 4 is a flowchart showing determination performed by the controller as to the installation state of the current sensor in the distributed power generation system according to Embodiment 2.
[Fig. 5] Fig. 5 is a flowchart showing determination performed by the controller as to the installation state of the current sensor in a distributed power generation system according to Embodiment 3.
[Fig. 6] Fig. 6 is a view showing a schematic configuration of a distributed power generation system according to Embodiment 4 ofthe present invention.

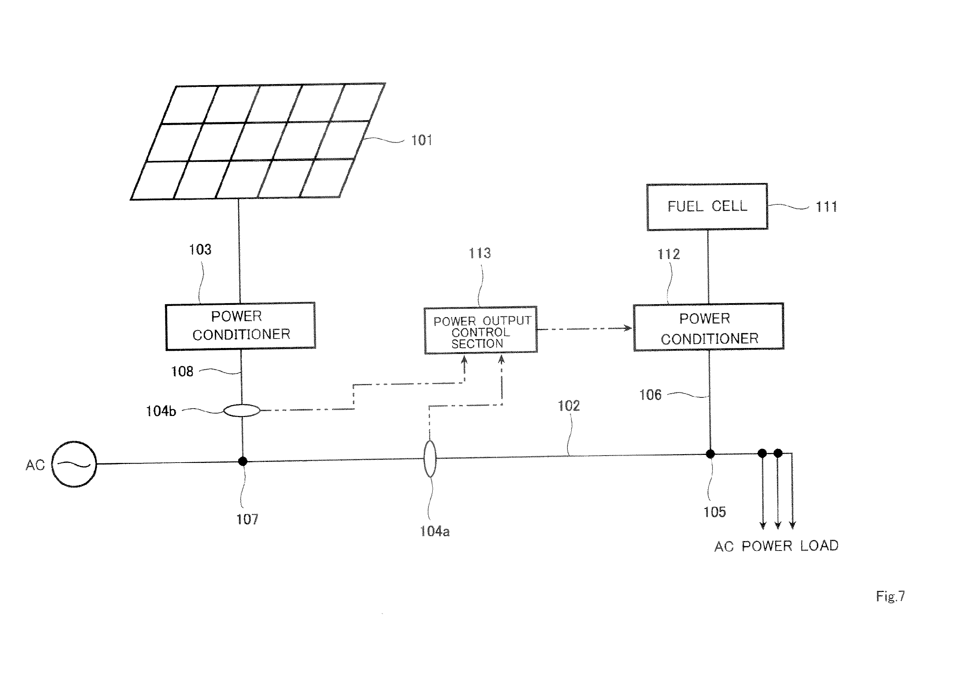

[Fig. 7] Fig. 7 is a view showing a schematic configuration of an electricity distribution system disclosed in Patent Literature 1.

### Description of Embodiments

Hereinafter, preferred embodiments of the present invention will be described with reference to the drawings. Throughout the drawings, the same or corresponding components are designated by the same reference symbols, and will not be described in repetition. In addition, throughout the drawings, components required to describe the present invention are depicted and the other components are not illustrated. Moreover the present invention is not limited to the embodiments below.

### (Embodiment 1)

A distributed power generation system according to Embodiment 1 of the present invention is a distributed power generation system connected to an electric wire connecting a power supply utility to a power load, in which a second power generation device is connected to the electric wire in a position between the power supply utility and a first connection point, the distributed power generation system comprising: an inverter connected to the first connection point, a first power generation device for supplying the electric power to the inverter, a current sensor provided on the electric wire in a position between the power supply utility and the first connection point, and a controller, wherein in a case where a current flowing in a direction from the first connection point to the power supply utility is a positive current, the controller determines that there is an abnormality in an installation state of the current sensor, or performs notification the abnormality in the installation state of the current sensor, when an electric power difference obtained by subtracting electric power consumed in the power load from the electric power output from the inverter is greater than a first threshold which is greater than 0.

The distributed power generation system according to Embodiment 1 may further comprise a display device which changes a display content based on information transmitted from the controller, and the controller may cause the display device to display the abnormality in the installation state of the current sensor, when the electric power difference is greater than the first threshold. The controller may directly notify a maintenance company that the abnormality has occurred in the installation state of the current sensor, or performs notification of the abnormality by a siren, a speaker, etc..

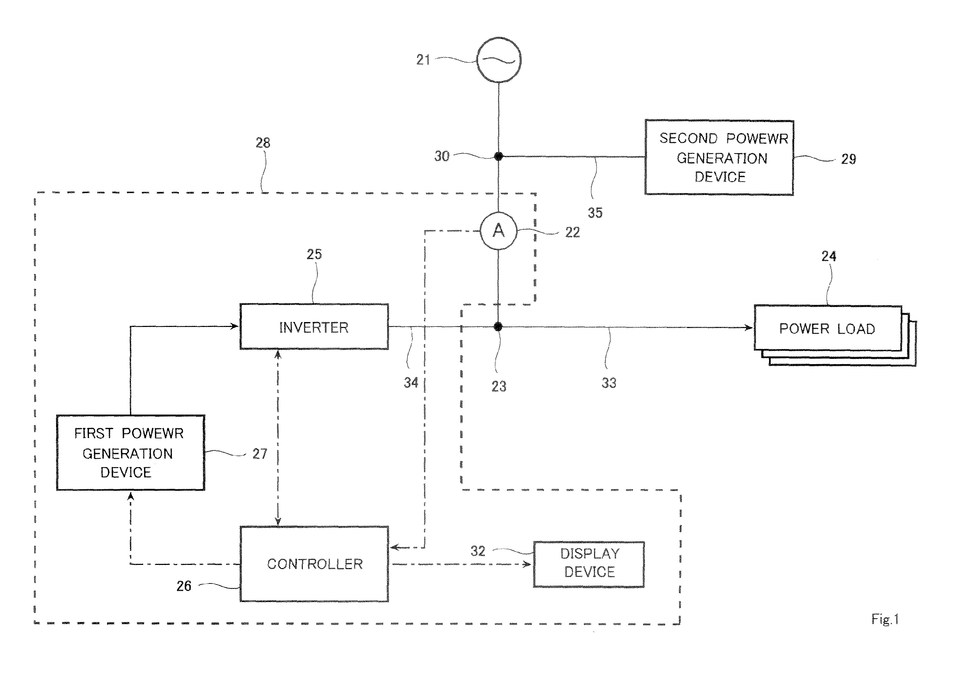

Hereinafter, an exemplary distributed power generation system according to Embodiment 1 will be described in detail with reference to Figs. 1 to 3.

### [Configuration of distributed power generation system]

Fig. 1 is a view showing a schematic configuration of a distributed power generation system according to Embodiment 1, showing a state in which a current sensor is installed in a correct position.

As shown in Fig. 1, a distributed power generation system 28 according to Embodiment 1 is connected to an electric wire 33 composed of single-phase two wires or single-phase three wires, for connecting a power supply utility 21 to a power load 24. A second power generation device 29 is connected to the electric wire 33 in a position between the power supply utility and a first connection point 23. More specifically, the second power generation device 29 is connected to a second connection point 30 on the electric wire 33 via an electric wire 35. The second power generation device 29 is a power generation device for performing power generation by utilizing natural energy such as solar light, wind power, solar heat, etc.. The power load 24 is a device which consumes the electric power, such as a laundry machine, an air conditioner, or refrigerator, installed in home.

The distributed power generation system 28 includes a current sensor 22, an inverter 25, a controller 26, a first power generation device 27 and a display device 32. The first power generation device 27 is connected to the first connection point 23 on the electric wire 33, via an electric wire 34. The inverter 25 is provided at a portion of the electric wire 34.

The first power generation device 27 is a power generation device which generates electric power using fossil fuel, and is, for example, a power generator such as a fuel cell or a gas turbine. The inverter 25 converts DC power generated in the first power generation device 27 into AC power and supplies the AC power to the power load 24. The inverter 25 is configured to detect a voltage value of the electric wire 34 (electric wire 33).

The current sensor 22 is provided on the electric wire 33 in a position between the first connection point 23 and the second connection point 30. To be more specific, the current sensor 22 is a sensor installed within a distribution board of a customer load (not shown) to detect a magnitude and direction of the current flowing through the electric wire 33. Specifically, it is supposed that the current flowing in a direction from the first connection point 23 (power load 24) to the power supply utility 21 is a positive current, and the current sensor 22 detects the magnitude and direction (current value) of the current flowing through the electric wire 33, and outputs the detected value to the controller 26. As example ofthe current sensor 22, there is a clamp-type AC current sensor.

The controller 26 may be configured in any way so long as it is a device for controlling the distributed power generation system 28. The controller 26 includes a processor section represented by a microprocessor, a CPU, etc., and a storage section constituted by a memory, etc., which contains programs for executing control operations. The processor section of the controller 26 reads out specified control programs stored in the memory section and executes them, thus performing control relating to the distributed power generation system 28, for example, power generation in the first power generation device 27, and the electric power output from the inverter 25.

The controller 26 is configured to determine that there is an abnormality in an installation state of the current sensor 22, or performs notification of the abnormality in the installation state of the current sensor 22, when an electric power difference obtained by subtracting electric power consumed in the power load 24 from the electric power output from the inverter 25 is greater than a first threshold which is greater than 0. In Embodiment 1, the controller 26 causes the display device 32 to display the abnormality in the installation state of the current sensor 22. The determination as to the installation state of the current sensor 22 will be described later.

The controller 26 may consist of a single controller or may be constituted by a controller group composed of a plurality of controllers that cooperate with each other to control the distributed power generation system 28. Or, the controller 26 may be constituted by a microcontroller, a MPU, a PLC (Programmable Logic Controller), a logic circuit, etc..

The display device 32 may be configured in any way so long as it is able to display information (text data, image data, etc.) output from the controller 26. As the display device 32, for example, a remote controller, a cellular phone, a smart phone, a tablet-type computer, etc., may be used. The display device 32 may include a notification section, for example, a manipulation member such as a switch, a display section such as an LCD screen, or a speaker.

### [Operation of distributed power generation system]

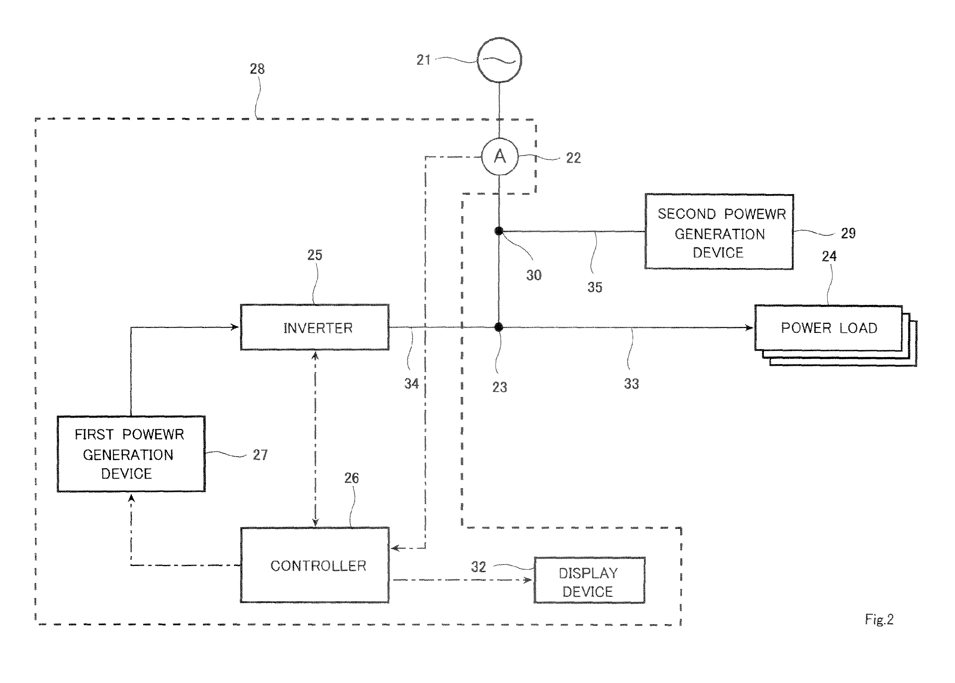

Initially, the installation position of the current sensor 22 will be described with reference to Figs. 1 and 2.

Fig. 2 is a schematic view showing a state in which the current sensor is installed in a wrong (incorrect) position in the distributed power generation system.

The distributed power generation system 28 of Fig. 2 is identical in components to the distributed power generation system 28 of Fig. 1 except that the current sensor 22 is provided on the electric wire 33 in a position between the power supply utility 21 and the second connection point 30.

It is assumed that the current sensor 22 detects - 1.0A, the inverter 25 outputs electric power of 750W and a voltage value of 100V is detected. As shown in Fig. 1, in the case where the current sensor 22 is provided in a correct position, the electric power of 100W is supplied from the power supply utility 21 and/or the second power generation device 29, to the power load 24, and the electric power consumed in the power load 24 is 850W. If a current sensor is further provided on the electric wire 35, like the electricity distribution system disclosed in Patent Literature 1, the electric power supplied from the power supply utility 21 and/or the second power generation device 29,to the power load 24, can be calculated (obtained). For example, in a case where the current sensor provided on the electric wire 35 detects 0.0A, this means that the electric power of 100W is supplied from the power supply utility 21. Also, in a case where the current sensor provided on the electric wire 35 detects 1.0A, this means that the second power generation device 29 is generating electric power of 100W.

By comparison, as shown in Fig. 2, in the case where the current sensor 22 is provided in a wrong position, the electric power consumed in the power load 24 is unknown unless the electric power generated in the second power generation device 29 is known. Moreover, even when the current sensor is further provided on the electric wire 35, like the electricity distribution system disclosed in Patent Literature 1, the electric power consumed in the power load 24 is unknown. The reason is as follows.

In a case where the current sensor 22 is disposed in the position shown in Fig. 2 and the second power generation device 29 is not generating electric power, a current value detected by the current sensor provided on the electric wire 35 is 0.0A, and the electric power consumed in the power load 24 is 850W On the other hand, in a case where the second power generation device 29 is generating electric power of 100W, a current value detected by the current sensor provided on the electric wire 35 is 1.0A, but the electric power consumed in the power load 24 is 950W.

As should be appreciated from above, even when the two current sensors detect an equal value, the electric power consumed in the power load 24 is different, if the current sensor 22 is provided in a wrong position. Therefore, it is important to determine whether or not the current sensor 22 is disposed in a correct position, in terms of the control ofthe distributed power generation system 28.

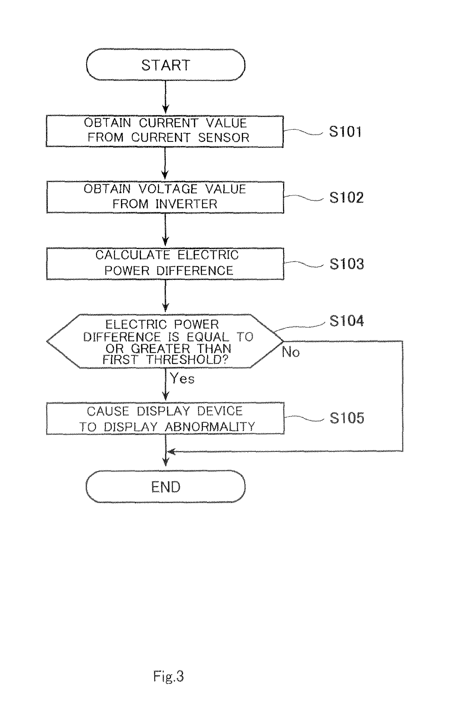

Next, a description will be given of the determination performed by the controller 26 as to the installation state of the current sensor 22 in the distributed power generation system 28 according to Embodiment 1, with reference to Figs. 1 and 3.

Fig. 3 is a flowchart showing determination performed by the controller as to the installation state of the current sensor in the distributed power generation system according to Embodiment 1.

As shown in Fig. 3, the controller 26 obtains the current value detected by the current sensor 22, from the current sensor 22 (step S101). Then, the controller 26 obtains a value of a voltage applied to the electric wire 34 (electric wire 33) from the inverter 25 (step S102).

Then, the controller 26 calculates an electric power difference obtained by subtracting the electric power consumed in the power load 24 from the electric power output from the inverter 25, from the current value obtained in step S101 and the voltage value obtained in step S102 (step S103), and determines whether or not the electric power difference is greater than a first threshold (step S 104).

The first threshold is a value of the electric power which is greater than 0, and may be set to a desired value which is greater than 50W which is a set value decided in a conference (agreement for connecting to the power supply utility 21) with an electric power company in a case where the distributed power generation system 28 is prohibited from performing reverse power flow. The first threshold may be, for example 300W. The first threshold may be the electric power output from the inverter 25, or may be a maximum electric power output of the inverter 25. This is because if the current sensor 22 is provided in a correct position, electric power which is equal to or greater than the electric power output of the inverter 25 does not flow through the electric wire 33.

If the controller 26 determines that the electric power difference calculated in step S103 is greater than the first threshold (Yes in step S104), it causes the display device 32 to display the abnormality in the installation state of the current sensor 22 (step S105), and terminates the present flow. On the other hand, if the controller 26 determines that the electric power difference calculated in step S103 is equal to or less than the first threshold (No in step S104), it determines that the current sensor 22 is provided in a correct position, and therefore terminates the present flow.

As described above, in the distributed power generation system 28 according to Embodiment 1, the installation state of the current sensor 22 can be determined. If there is an abnormality in the installation state ofthe current sensor 22, the display device 32 displays the abnormality, to inform the user of the abnormality. As a result, a maintenance work can be initiated earlier.

### (Embodiment 2)

In a distributed power generation system according to Embodiment 2 of the present invention, the controller disconnects the inverter and the electric wire from each other and causes the first power generation device to stop power generation, when the electric power difference is greater than the first threshold.

The configuration of the distributed power generation system 28 according to Embodiment 2 is identical to that of the distributed power generation system 28 according to Embodiment 1, and therefore will not be described in repetition.

### [Operation of distributed power generation system]

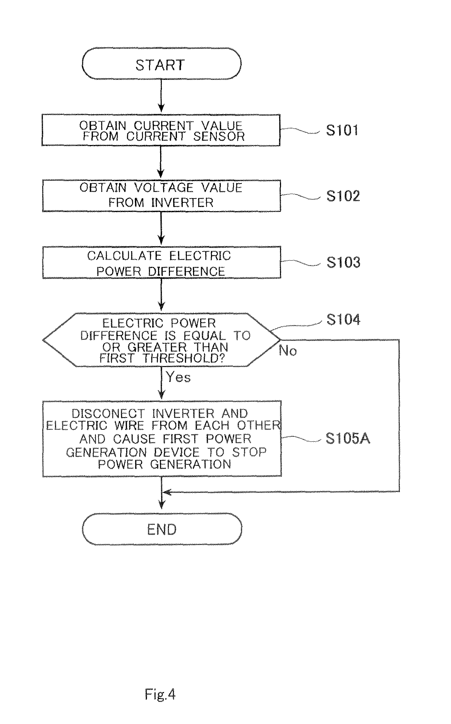

Fig. 4 is a flowchart showing determination performed by the controller as to the installation state of the current sensor in the distributed power generation system according to Embodiment 2.

As shown in Fig. 4, the basic operation performed in the determination as to the installation state of the current sensor 22 in the distributed power generation system 28 according to Embodiment 2 is identical to that of the distributed power generation system 28 according to Embodiment 1 except that step S105A is performed in place of step S105.

Specifically, when the controller 26 determines that the electric power difference calculated in step S 103 is greater than the first threshold (Yes in step S 104), it disconnects a relay (not shown) to disconnect the inverter 25 and the electric wire 33 (power supply utility 21) from each other, and causes the first power generation device 27 to stop power generation (step S105A).

The power generation in the first power generation device 27 is stopped in step S105A for the reasons as stated below. As described above, the case where the electric power difference calculated in step S103 is greater than the first threshold is the case where there is an abnormality in the installation position of the current sensor 22. For this reason, even if the operation of the first power generation device 27 is continued, and then the inverter 25 is interactively connected again to the power supply utility 21 to supply the electric power to the power load 24, the electric power difference is greater than the first threshold, so that the inverter 25 is disconnected from the power supply utility 21 again. Thus, if the operation of the first power generation device 27 is continued, the raw material or the like will be wastefully consumed, and therefore, the power generation in the first power generation device 27 is stopped.

The distributed power generation system 28 according to Embodiment 2 configured as described above is able to determine the installation state ofthe current sensor 22. In addition, in the distributed power generation system 28 according to Embodiment 2, if it is determined that there is an abnormality in the installation position of the current sensor 22, then the operation of the first power generation device 27 is stopped, thereby suppressing wasteful consumption of the raw material or the like.

Alternatively, when the electric power difference calculated in step S 103 is greater than the first threshold, the controller 26 may cause the display device 32 to display the abnormality as in Embodiment 1, and then may disconnect the inverter 25 and the electric wire 33 (power supply utility 21) from each other and cause the first power generation device 27 to stop power generation.

### (Embodiment 3)

A distributed power generation system according to Embodiment 3 of the present invention is configured in such a manner that in a case where the first power generation device is prohibited from performing reverse power flow to the power supply utility and the second power generation device is permitted to perform the reverse power flow to the power supply utility, the controller continues a state in which the inverter and the electric wire are connected to each other and causes the first power generation device to continue power generation, when the electric power difference is greater than 0 and is equal to or less than a second threshold which is smaller than the first threshold, and the controller disconnects the inverter and the electric wire from each other and causes the first power generation device to continue the power generation, when the electric power difference is greater than the second threshold and is equal to or less than the first threshold.

In the distributed power generation system according to Embodiment 3, when the electric power difference is greater than 0 and is equal to or less than the second threshold which is smaller than the first threshold, the controller may continue a state in which the inverter and the electric wire are connected to each other, and may cause the first power generation device to continue the power generation, and may connect the inverter and the electric wire to each other after a passage of a predetermined time.

The configuration of the distributed power generation system 28 according to Embodiment 3 is identical to that of the distributed power generation system 28 according to Embodiment 1, and therefore will not be described in repetition.

### [Operation of distributed power generation system]

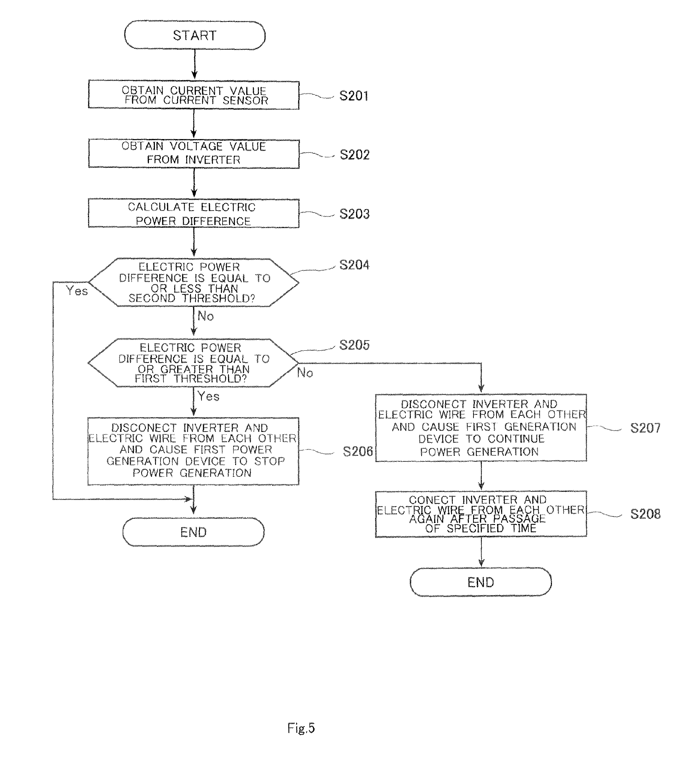

Fig. 5 is a flowchart showing determination performed by the controller as to the installation state of the current sensor in the distributed power generation system according to Embodiment 3.

As shown in Fig. 5, the controller 26 obtains the current value detected by the current sensor 22, from the current sensor 22 (step S201). Then, the controller 26 obtains a value of a voltage applied to the electric wire 34 (electric wire 33) from the inverter 25 (step S202).

Then, the controller 26 calculates an electric power difference obtained by subtracting the electric power consumed in the power load 24 from the electric power output from the inverter 25, from the current value obtained in step S201 and the voltage value obtained in step S202 (step S203), and determines whether or not the electric power difference is equal to or less than the second threshold (step S204).

The second threshold is a value of the electric power which is greater than 0 and smaller than the first threshold and may be set as desired. The second threshold may be set to 50W which is a set value decided in a conference (agreement for connecting to the power supply utility 21) with an electric power company in a case where the distributed power generation system 28 is prohibited from performing reverse power flow.

When the controller 26 determines that the electric power difference calculated in step S203 is equal to or less than the second threshold (Yes in step S104), it determines that the current sensor 22 is provided in a correct position, and therefore terminates the present flow. On the other hand, when the controller 26 determines that the electric power difference calculated in step S203 is greater than the second threshold (No in step S204), it moves to step S205.

In step S205, the controller 26 determines whether or not the electric power difference calculated in step S203 is greater than the first threshold. When the controller 26 determines that the electric power difference calculated in step S203 is greater than the first threshold (Yes in step S205), it disconnects a relay (not shown) to disconnect the inverter 25 and the electric wire 33 (power supply utility 21) from each other, and causes the first power generation device 27 to stop power generation (step S206). On the other hand, when the controller 26 determines that the electric power difference calculated in step S203 is equal to or less than the first threshold (No in step S205), it moves to step S207.

In step S207, the controller 26 disconnects the relay (not shown) to disconnect the inverter 25 and the electric wire 33 (power supply utility 21) from each other, but causes the first power generation device 27 to continue power generation. This is because it is estimated that the electric power difference has temporarily exceeded the second threshold (reverse power flow from the first power generation device 27 to the power supply utility 21 has occurred) due to a temporal reduction of the electric power consumed in the power load 24.

Then, when a predetermined time passes after the controller 26 has disconnected the inverter 25 and the electric wire 33 (power supply utility 21) from each other, the controller 26 connects the relay (not shown) to connect the inverter 25 and the electric wire 33 (power supply utility 21) to each other again (step S208). This predetermined time may be set to desired time, and may be 10 minutes or 1 hour.

The distributed power generation system 28 according to Embodiment 3 configured as described above can achieve advantages as those of the distributed power generation system 28 according to Embodiment 2.

In addition, in the distributed power generation system 28 according to Embodiment 3, when it is detected that the reverse power flow from the first power generation device 27 to the power supply utility 21 has occurred, the inverter 25 and the power supply utility 21 are disconnected from each other, and thereafter the inverter 25 and the power supply utility 21 are connected to each other again. In this configuration, energy consumption required to stop the operation of the first power generation device 27 and re-start-up the first power generation device 27 can be made less than in the case where the operation of the first power generation device 27 is stopped when it is detected that the reverse power flow from the first power generation device 27 to the power supply utility 21 has occurred. Thus, energy saving can be achieved with an improved level.

Although in Embodiment 3, the controller 26 connects the inverter 25 and the power supply utility 21 to each other again after a passage of the predetermined time, the present invention is not limited to this. For example, after step S207, the controller 26 may obtain the current value from the current sensor again, calculate the electric power difference, and connect the inverter 25 and the power supply utility 21 to each other again when the electric power difference is equal to or less than the second threshold.

Alternatively, when the electric power difference calculated in step S203 is greater than the first threshold, the controller 26 may cause the display device 32 to display the abnormality as in Embodiment 1, and then may disconnect the inverter 25 and the electric wire 33 (power supply utility 21) from each other and cause the first power generation device 27 to stop power generation.

### (Embodiment 4)

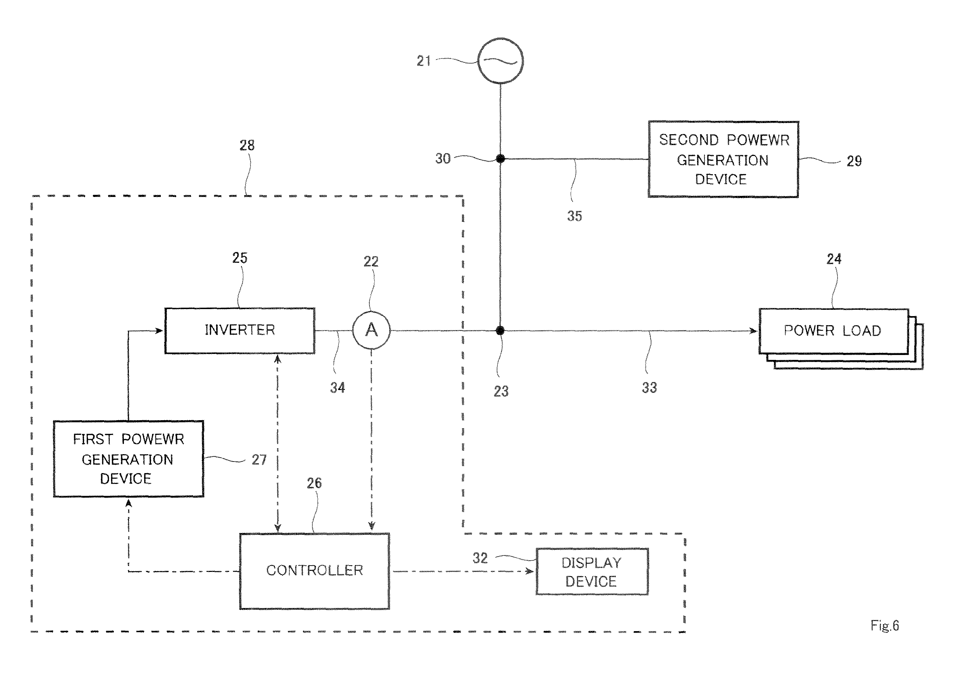

Fig. 6 is a view showing a schematic configuration of a distributed power generation system according to Embodiment 4 of the present invention.

As shown in Fig. 13, the basic configuration of the distributed power generation system 28 according to Embodiment 4 of the present invention is identical to that of the distributed power generation system 28 according to Embodiment 1, except for a position in which the current sensor 22 is disposed. Specifically, the current sensor 22 is provided in a portion of the electric wire 34.

The distributed power generation system 28 according to Embodiment 4 configured as described above can achieve the same advantages as those of the distributed power generation system 28 according to Embodiment 1.

Numeral modifications and alternative embodiments of the present invention will be apparent to those skilled in the art in view of the foregoing description. Accordingly, the description is to be construed as illustrative only, and is provided for the purpose ofteaching those skilled in the art the best mode of carrying out the invention. The details of the structure and/or function may be varied substantially without departing from the spirit of the invention.

### Industrial Applicability

A distributed power generation system and an operation method thereof of the present invention can determine an installation state of a current sensor, and therefore are useful.

### Reference Signs List

- 21: power supply utility
- 22: current sensor
- 23: first connection point
- 24: power load
- 25: inverter
- 26: controller
- 27: first power generation device
- 28: distributed power generation system
- 29: second power generation device
- 30: second connection point
- 31: third connection point
- 32: display device
- 33: electric wire
- 34: electric wire
- 35: electric wire
- 101: solar cell
- 102: electric wire
- 103: power conditioner
- 104a: first current sensor
- 104b: second current sensor
- 105: first connection point
- 106: electric wire
- 107: second connection point
- 108: electric wire
- 111: fuel cell
- 112: power conditioner
- 113: control section

## Claims

1. A distributed power generation system connected to an electric wire connecting a power supply utility to a power load, in which a second power generation device is connected to the electric wire in a position between the power supply utility and a first connection point, the distributed power generation system comprising:
an inverter connected to the first connection point;
a first power generation device for supplying the electric power to the inverter;
a current sensor provided on the electric wire in a position between the utility power supply and the first connection point; and
a controller;
wherein in a case where a current flowing in a direction from the first connection point to the power supply utility is a positive current,
the controller determines that there is an abnormality in an installation state of the current sensor, or performs notification of the abnormality in the installation state of the current sensor, when an electric power difference obtained by subtracting electric power consumed in the power load from the electric power output from the inverter is greater than a first threshold which is greater than 0.

2. The distributed power generation system according to claim 1,
wherein the controller disconnects the inverter and the electric wire from each other and causes the first power generation device to stop power generation, when the electric power difference is greater than the first threshold.

3. The distributed power generation system according to claim 1 or 2,
wherein in a case where the first power generation device is prohibited from performing reverse power flow to the power supply utility and the second power generation device is permitted to perform the reverse power flow to the power supply utility,
the controller continues a state in which the inverter and the electric wire are connected to each other and causes the first power generation device to continue power generation, when the electric power difference is greater than 0 and is equal to or less than a second threshold which is smaller than the first threshold; and
the controller disconnects the inverter and the electric wire from each other and causes the first power generation device to continue the power generation, when the electric power difference is greater than the second threshold and is equal to or less than the first threshold.

4. The distributed power generation system according to claim 3,
wherein when the electric power difference is greater than 0 and is equal to or less than the second threshold which is smaller than the first threshold,
the controller continues a state in which the inverter and the electric wire are connected to each other, and causes the first power generation device to continue the power generation, and
the controller connects the inverter and the electric wire to each other after a passage of a predetermined time.

5. The distributed power generation system according to any one of claims 1 to 4,
wherein the first threshold is the electric power output of the inverter.

6. The distributed power generation system according to any one of claims 1 to 4,
wherein the first threshold is a maximum electric power output of the inverter.

7. The distributed power generation system according to any one of claims 1 to 6, further comprising:
a display device which changes a display content based on information transmitted from the controller;
wherein the controller causes the display device to display the abnormality in the installation state of the current sensor, when the electric power difference is greater than the first threshold.

8. A method of operating a distributed power generation system connected to an electric wire connecting a power supply utility to a power load, in which a second power generation device is connected to the electric wire in a position between the power supply utility and a first connection point, the distributed power generation system including:
an inverter connected to the first connection point;
a first power generation device for supplying the electric power to the inverter;
a current sensor provided on the electric wire in a position between the utility power supply and the first connection point; and
a controller; the method comprising the step of:
in a case where a current flowing in a direction from the first connection point to the power supply utility is a positive current,
determining by the controller that there is an abnormality in an installation state of the current sensor, or performs notification of the abnormality in the installation state of the current sensor, when an electric power difference obtained by subtracting electric power consumed in the power load from the electric power output from the inverter is greater than a first threshold which is greater than 0.
